# EUROPEAN PATENT APPLICATION

(11) **EP 4 006 783 A1**
(43) Date of publication of application: **01.06.2022**
(21) Application number: 20846781.1
(22) Date of filing: 24.07.2020
(51) Int. Cl.: G06N 3/06

(54) **DATA BLOCK PROCESSING METHOD AND APPARATUS, DEVICE, AND STORAGE MEDIUM**

(30) Priority: 26.07.2019 CN 201910683971
(71) Applicant: Hangzhou Hikvision Digital Technology Co., Ltd., Hangzhou, Zhejiang 310051 (CN)
(72) Inventor: LI, Zheyang, Hangzhou, Zhejiang 310051 (CN)
(74) Representative: Yang, Shu
(86) International application number: PCT/CN2020/104605
(87) International publication number: WO 2021/018053

(57) **Abstract**

The present application relates to the technical field of machine learning, and disclosed are a data block processing method and apparatus, a device, and a storage medium. The method comprises: obtaining, by an element-wise operation layer in a neural network model, n data blocks whose data type is a fixed-point type input by an upper-level network layer; obtaining a compensation coefficient corresponding to each channel of each data block from stored model data or input data of the element-wise operation layer; multiplying the data on each channel in the n data blocks by the compensation coefficient corresponding to each channel respectively to obtain n compensation data blocks; and if n is greater than 1, performing an element-wise operation on the n compensation data blocks, and outputting the obtained element-wise operation result. In the present application, a compensation coefficient is set for each channel, so that the element-wise operation layer can process the fixed-point type data. The operation mode is more flexible, and the mode of obtaining the compensation coefficient is also flexible.

## Description

### CROSS-REFERENCE TO RELATED APPLICATION

The present disclosure claims priority to Chinese Patent Application No. 201910683971.3, filed with the China National Intellectual Property Administration (CNIPA) on July 26, 2019 and entitled "DATA BLOCK PROCESSING METHOD AND APPARATUS, AND STORAGE MEDIUM", which is incorporated herein by reference in its entirety.

### TECHNICAL FIELD

The present disclosure relates to the technical field of machine learning, and in particular, to a data block processing method and apparatus, a device, and a storage medium.

### BACKGROUND

In recent years, with the continuous development of artificial intelligence technology, neural networks are increasingly used in image recognition, speech recognition and other fields. A neural network model usually includes multiple network layers, such as a convolution layer or an element-wise (Eltwise) layer. The Eltwise layer is a collective term for an important functional layer in a neural network model, and is used to process data blocks outputted from a previous network layer, for example, adding up or multiplying data blocks outputted from an upper level network layer.

In the related technology, the Eltwise layer can perform calculations only in a floating-point form, i.e., the Eltwise layer can process only floating-point data, which refers to data with a variable decimal point. Specifically, an element-wise operation process of the Eltwise layer includes: receiving multiple data blocks from the upper level network layer, where all data in the data blocks is floating-point data, and performing an element-wise operation directly on the multiple data blocks to obtain an element-wise operation result. The element-wise operation refers to element-by-element (same-position) computation on two or more data blocks, which specifically can be an addition operation or a multiplication operation, etc.

Since the current Eltwise layer can process only floating-point data, an operation device needs to cache input data of the Eltwise layer with a high bit width. Moreover, due to the complex operation of the floating-point data, the operation efficiency of the Eltwise layer is low, which leads to low operation efficiency of the neural network model with the Eltwise layer on relevant hardware. In addition, the Eltwise layer can run only on hardware capable of processing floating-point data, which leads to high hardware requirements.

### SUMMARY

The present disclosure provides a data block processing method and apparatus, a device, and a storage medium, to solve the problems of low operation efficiency and high hardware requirements of the Eltwise layer in the related art. The technical solutions are as follows:

According to an aspect, a data block processing method is provided, including:
obtaining, by an element-wise layer of a neural network model, n data blocks inputted by an upper level network layer of the element-wise layer, all data in the n data blocks being fixed-point data, and n being a positive integer;
obtaining, by the element-wise layer, compensation factors corresponding to channels of each of the n data blocks from stored model data or input data of the element-wise layer;
multiplying, by the element-wise layer, data on channels of each of the n data blocks by the compensation factors corresponding to the channels respectively to obtain n compensated data blocks; and
performing, by the element-wise layer, an element-wise operation on the n compensated data blocks to obtain an element-wise operation result and outputting the element-wise operation result, in a case that n is an integer greater than 1.

Optionally, the obtaining the compensation factors corresponding to the channels of each of the n data blocks from stored model data or input data of the element-wise layer includes:
obtaining compensation factors corresponding to channels of a target data block from the stored model data for the target data block in the n data blocks, the target data block being any one of the n data blocks; or
obtaining the compensation factors corresponding to channels of the target data block from the input data of the element-wise layer.

Optionally, the multiplying data on channels of each of the n data blocks by the compensation factors corresponding to channels respectively to obtain n compensated data blocks includes:
multiplying the data on channels of each of the n data blocks by the compensation factors corresponding to channels respectively, and rounding multiplication results to obtain the n compensated data blocks.

Optionally, in a case that n is an integer greater than 1, the n data blocks have different data accuracy, all data in the n compensated data blocks is fixed-point data, and the n compensated data blocks have the same data accuracy.

Optionally, the performing the element-wise operation on the n compensated data blocks to obtain the element-wise operation result includes:
adding up or multiplying the n compensated data blocks to obtain the element-wise operation result; or
adding up or multiplying the n compensated data blocks to obtain a first operation result, and adding the first operation result with a bias factor to obtain the element-wise operation result.

Optionally, the outputting the element-wise operation result includes:
quantizing the element-wise operation result to obtain first output data, a quantity of bits occupied by the first output data being a preset quantity of bits; and
outputting the first output data to a next network layer of the element-wise layer.

Optionally, after the multiplying, by the element-wise layer, data on channels of each of the n data blocks by the compensation factors corresponding to channels respectively to obtain n compensated data blocks, the method further includes:
outputting the n compensated data blocks by the element-wise layer in a case that n is equal to 1.

Optionally, the outputting the n compensated data blocks includes:
quantizing data in the n compensated data blocks to obtain second output data, a quantity of bits occupied by the second output data being a preset quantity of bits; and
outputting the second output data to a next network layer of the element-wise layer.

According to a second aspect, a data block processing apparatus is provided. The apparatus is applied to an element-wise layer of a neural network model, and includes:
a first obtaining module, configured to obtain, by the element-wise layer of the neural network model, n data blocks inputted by an upper level network layer of the element-wise layer, all data in the n data blocks being fixed-point data, n being a positive integer;
a second obtaining module, configured to obtain, by the element-wise layer, compensation factors corresponding to channels of each of the n data blocks from stored model data or input data of the element-wise layer;
a compensation module, configured to multiply, by the element-wise layer, data on channels of each of the n data blocks by the compensation factors corresponding to channels respectively to obtain n compensated data blocks; and
a first operation module, configured to perform, by the element-wise layer, an element-wise operation on the n compensated data blocks to obtain an element-wise operation result, and output the element-wise operation result, in a case that n is an integer greater than 1.

Optionally, the second obtaining module is configured to:
obtain the compensation factors corresponding to channels of a target data block from the stored model data for the target data block in the n data blocks, the target data block being any one of the n data blocks; or
obtain the compensation factors corresponding to channels of the target data block from the input data of the element-wise layer.

Optionally, the compensation module is configured to:
multiply, by the element-wise layer, the data on channels of each of the n data blocks by the compensation factors corresponding to the channels respectively, and round multiplication results to obtain the n compensated data blocks.

Optionally, in a case that n is an integer greater than 1, the n data blocks have different data accuracy, all data in the n compensated data blocks is fixed-point data, and the n compensated data blocks have the same data accuracy.

Optionally, the first operation module is configured to:
add up or multiply the n compensated data blocks to obtain the element-wise operation result; or
add up or multiply the n compensated data blocks to obtain a first operation result, and add the first operation result with a bias factor to obtain the element-wise operation result.

Optionally, the first operation module is configured to:
quantize the element-wise operation result to obtain first output data, a quantity of bits occupied by the first output data being a preset quantity of bits; and
output the first output data to a next network layer of the element-wise layer.

Optionally, the apparatus further includes:
a second operation module, configured to output the n compensated data blocks by the element-wise layer in a case that n is equal to 1.

Optionally, the second operation module is configured to:
quantize data in the n compensated data blocks to obtain second output data, a quantity of bits occupied by the second output data being a preset quantity of bits; and
output the second output data to a next network layer of the element-wise layer.

According to a third aspect, a computer device is provided, including a processor, a communication interface, a memory, and a communication bus, wherein the processor, the communication interface, and the memory communicate with each other through the communication bus, the memory is configured to store a computer program, and the processor is configured to execute the program stored in the memory, to implement steps of any data block processing method described above.

According to a fourth aspect, a computer-readable storage medium is provided, wherein the storage medium stores a computer program, and the computer program is executed by a processor to implement steps of any data block processing method described above.

According to a fifth aspect, a computer program product including an instruction is provided. The computer program product, when run on a computer, causes the computer to perform steps of any data block processing method described above.

The technical solutions provided in the embodiments of the present disclosure achieve at least the following beneficial effects:
In the embodiments of the present disclosure, an element-wise layer of a neural network model can obtain n data blocks which are inputted by an upper level network layer and all date of which is fixed-point data; then obtain compensation factors corresponding to channels of each of the n data blocks from stored model data or input data of the element-wise layer; multiply data on channels of each of the n data blocks by the compensation factors corresponding to channels respectively to obtain n compensated data blocks; and in a case that n is greater than 1, perform an element-wise operation on the n compensated data blocks to obtain an element-wise operation result, and output the element-wise operation result. In other words, the present disclosure improves the element-wise layer of the neural network model, so that the element-wise layer can process fixed-point data. Therefore, an operation device can cache input data of the element-wise layer with low bits, thereby greatly reducing bandwidth consumption. Moreover, due to the relatively simple operation of the fixed-point data, operation efficiency of the neural network model on relevant hardware is improved, thus reducing hardware requirements. In addition, by setting compensation factors for channels of each data block, and multiplying data on channels of each data block by the compensation factors corresponding to channels respectively, n data blocks with inconsistent data accuracy can be converted into n compensated data blocks with consistent data accuracy. In this way, the element-wise layer can compensate for an operation error caused by a difference in data accuracy or data range by the set compensation factors, thereby improving the calculation accuracy of a fixed-point network. In addition, feature channels of the data blocks can be weighted, thus improving the flexibility of the element-wise operation.

### BRIEF DESCRIPTION OF THE DRAWINGS

To describe the technical solutions in the embodiments of the present disclosure more clearly, the following briefly introduces the accompanying drawings required for describing the embodiments. Apparently, the accompanying drawings in the following description show merely some embodiments of the present application, and those of ordinary skill in the art may still derive other drawings from these accompanying drawings without creative efforts.
FIG. 1 is a schematic diagram of an element-wise operation of an Eltwise layer according to the related art;
FIG. 2 is a flowchart of a data block processing method according to an embodiment of the present disclosure;
FIG. 3 is a schematic diagram of an element-wise operation of an Eltwise layer according to an embodiment of the present disclosure;
FIG. 4 is a schematic structural diagram of a data block processing apparatus according to an embodiment of the present disclosure; and
FIG. 5 is a schematic structural diagram of a computer device according to an embodiment of the present disclosure.

### DETAILED DESCRIPTION

In order to make the objectives, technical solutions and advantages of the present disclosure clearer, implementations of the present disclosure will be further described in detail in combination with the accompanying drawings.

In order to make the objectives, technical solutions and advantages of the present disclosure clearer, implementations of the present disclosure will be further described in detail in combination with the accompanying drawings.

Before a data block processing method provided in embodiments of the present disclosure is described in detail, terms involved in the embodiments of the present disclosure are illustrated first.

Convolution layer: a collective term for convolution computation layers in a neural network. The convolution layer can perform convolution computation on input data and then output a result to the next layer.

Element-wise (Eltwise) layer: a collective term for a functional layer in a neural network, characterized by element-by-element (same-position) computation on two or more data blocks of the same size, and the computation process may be addition or multiplication, etc.

Data block (Block): a data unit for transmitting interlayer data between network layers of a neural network is called a data block, which usually has a data structure of four or more dimensions, and can also be called a tensor.

Weight: a collective term for weight data in a convolution layer, and is usually stored in a tensor structure.

Activation: a collective term for data transmitted between layers in a neural network, and is usually stored in a tensor structure.

Channel: one dimension of data in a neural network, and a feature dimension is called channel.

Compensation factor: a scale factor for scaling a data range.

Bias factor: a compensation factor for correcting zero drift of data.

Next, application scenarios of the embodiments of the present disclosure are described.

In recent years, the quantization (fixed-point) technology is intensively used in processing chips, making it possible for neural networks, which originally require floating-point numbers for computational storage, to directly use low-precision fixed-point numbers for computational storage. However, the current quantization scheme does not provide a quantization method for operations in the Eltwise layer, i.e., the current Eltwise layer can only process floating-point data, and the current processing chip can only perform computation in a floating-point form during operations in the Eltwise layer. Therefore, the data input of the Eltwise layer still needs to be cached with high precision.

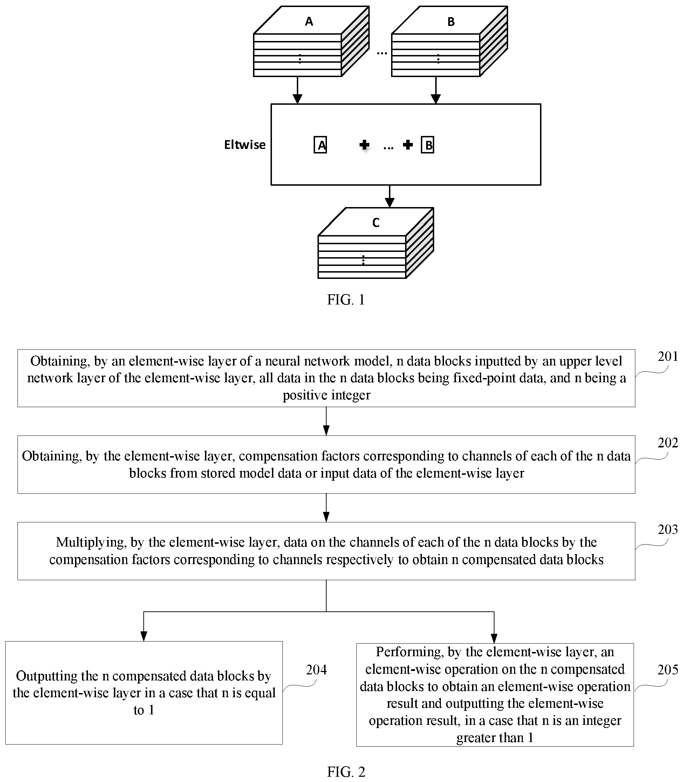

Referring to FIG. 1, which is a schematic diagram of an element-wise operation of an Eltwise layer according to the related art. As shown in FIG. 1, an upper level network layer of the Eltwise layer can input two or more sets of data blocks to the Eltwise layer, and data in each set of data blocks is high-precision floating-point data, where the two sets of data blocks are A and B. The Eltwise layer can directly perform an element-wise operation on the inputted multiple sets of data blocks and obtains an element-wise operation result C. For example, the multiple sets of data blocks are directly added up and the element-wise operation result C is obtained.

However, since the current Eltwise layer can only process floating-point data, an operation device needs to cache input data of the Eltwise layer with a high bit width. Moreover, due to the complex operation of the floating-point data, the operation efficiency of the Eltwise layer is low, which leads to low operation efficiency of the neural network model having the Eltwise layer on relevant hardware. In addition, the Eltwise layer can only run on hardware capable of processing floating-point data, which is more demanding on the hardware. In order to solve the problems of the current Eltwise layer, the embodiments of the present disclosure provide a method for improving the element-wise operation of the Eltwise layer, so that the improved Eltwise layer can process fixed-point data and maintain high calculation accuracy.

Next, the data block processing method provided in the embodiments of the present disclosure is described in detail. FIG. 2 is a flowchart of a data block processing method according to an embodiment of the present disclosure. The method is applied to a computer device or a processor. A neural network model runs in the computer device or the processor. The neural network model includes an element-wise layer, and the computer device may be a terminal or a server. Next, the method applied to a computer device is used as an example for description. As shown in FIG. 2, the method includes the following steps:

In step 201, n data blocks inputted by an upper level network layer of an element-wise layer are obtained by the element-wise layer of a neural network model, all data in the n data blocks being fixed-point data, n being a positive integer.

That is, the neural network model includes multiple network layers, one of which is an element-wise layer. For the element-wise layer in the neural network model, it may receive multiple data blocks, which are inputted from an upper level network layer and have a data type of fixed-point data. That is, the element-wise layer can process the fixed-point data.

The upper level network layer of the element-wise layer may be any type of network layer, such as a convolution layer, etc. The fixed-point data is data with fixed decimal points, i.e., integers that can be represented with a fixed bit width.

n may be 1 or an integer greater than 1. That is, the upper level network layer can input one data block or multiple data blocks to the element-wise layer.

It should be noted that when n is an integer greater than 1, the data accuracy of the n data blocks can be the same or different. If the data accuracy of the n data blocks is different, data ranges of the n data blocks are also different. The data accuracy is used to indicate a floating point data range of a data step, i.e., an increase in the real data range each time the value in the data block is increased by 1. For example, if a data block has data accuracy of 0.5, an increase in the real data range is actually 0.5 each time the value in the data block is increased by 1.

As an example, the data in the n blocks may have the same bit width, e.g., all the data is 8-bit or 16-bit fixed-point data. Of course, the data in the n blocks may also have different bit widths, which is not limited in the embodiments of the present disclosure.

It should be noted that the data range of the fixed-point data is generally inversely proportional to the data accuracy thereof. That is, the larger the data range, the lower the data accuracy; conversely, the lower the data accuracy, the larger the data range. For example, a piece of fixed-point data with a bit width of 8 bits can express integers within a range of (-128 - +127). Moreover, each piece of fixed-point data has a corresponding magnification factor to control its data range. The magnification factor is equivalent to the accuracy of the data.

For example, if the magnification factor of 8-bit fixed-point data is 1, the data range of the fixed-point data is (-128 - +127), i.e., the data accuracy of the fixed-point data is 1 and the data range thereof is (-128 - +127). In another example, if the magnification factor set for 8-bit fixed-point data is 1/128, the data range of the fixed-point data is (-1 - +127/128), i.e., the data accuracy of the fixed-point data is 1/128 and the data range thereof is (-1 - +127/128). It can be seen that for the fixed-point data with a fixed bit width, the larger the data range, the lower the data accuracy. That is, if a piece of fixed-point data with a fixed bit width is required to represent a larger data range, the data accuracy of the data needs to be compromised, i.e., the data accuracy of the data will be decreased. For two pieces of fixed-point data with the same bit width, if the two pieces of data have different data accuracy, the data ranges thereof are also different.

As an example, n is a positive integer greater than 1, all the data in the n data blocks are fixed-point data, and the n data blocks have different data accuracy. Correspondingly, the data ranges of the n data blocks are also different.

In step 202, compensation factors corresponding to channels of each of the n data blocks is obtained from stored model data or input data of the element-wise layer by the element-wise layer.

The compensation factor is a scale factor for scaling the data range, which can be used to adjust the data ranges of the data in the n data blocks and then adjust the data accuracy.

During the data processing in the Eltwise layer, the data accuracy of the data blocks inputted to the Eltwise layer may differ significantly, which in turn leads to significantly different data ranges of the data blocks. Therefore, an element-wise operation result obtained by performing the element-wise operation on the data blocks has a large overall distribution variance, resulting in low data accuracy of the element-wise operation result.

In the embodiments of the present disclosure, to solve the above problem, for each data block inputted to the Eltwise layer, corresponding compensation factors can be set for channels of each data block. That is, the compensation factors refined to the input channel level are proposed. The compensation factors can compensate for the data range difference of the data on channels of each data block, and then compensate for data range differences of the multiple data blocks, so that the data accuracy ranges of the multiple data blocks are also compensated, thereby converting the multiple data blocks into data blocks with the same data accuracy. That is, the compensation factors can adjust the data ranges to align data accuracy of data on different channels, so that the element-wise operation result obtained by performing the element-wise operation based on the compensated data has a smaller overall distribution variance and higher data accuracy. In this way, the low-accuracy fixed-point data can also achieve a balance between data range and data accuracy to meet the operation requirements of the Eltwise layer.

As an example, the compensation factors corresponding to channels of each data block can be denoted by Alpha.

As an example, the compensation factors corresponding to channels of each of the n data blocks can be set according to the data accuracy differences or data range differences of the n data blocks.

As an example, the compensation factors corresponding to the channels of each data block in the n data blocks may be pre-stored in model data of the neural network model, or may be inputted from outside the model without being pre-stored; alternatively, the compensation factors corresponding to the channels of some of the n data blocks are pre-stored in the model data of the neural network model, while the compensation factors corresponding to the channels of other data blocks are inputted from outside the model.

For example, for a target data block in the n data blocks, the compensation factors corresponding to channels of the target data block may be obtained from the stored model data, or the compensation factors corresponding to channels of the target data block may be obtained from the input data of the element-wise layer, and the target data block is any of the n data blocks.

All data inputted to the element-wise layer is called input data of the element-wise layer. The input data includes multiple data blocks and may also include other data, for example, compensation factors or bias factors inputted from outside the model.

That is, for any of the n data blocks, the compensation factors corresponding to channels of the data block may be obtained from the stored model data or from the input data of the Eltwise layer, i.e., inputted from outside the model.

It should be noted that when the compensation factors corresponding to channels of the target data block is configured to be inputted from outside the model, a feature selection in an attention (attention network) mode can be performed on the target data block, for example, weighting of each feature channel of the target data block is implemented.

As can be seen from the above, the embodiments of the present disclosure provide a flexible method to import compensation factors. That is, the compensation factors can be pre-stored in the model and used for adjusting data range, or the compensation factors inputted externally can be received and used as weighting coefficients in an attention mechanism.

In step 203, data on channels of each of the n data blocks is multiplied by the compensation factors corresponding to channels respectively by the element-wise layer to obtain n compensated data blocks.

For example, n is a positive integer greater than 1, and the n data blocks have different data accuracy. The data on channels of each of the n data blocks may be multiplied by the compensation factors corresponding to channels respectively to obtain n compensated data blocks which have the same data accuracy, and all data in the n compensated data blocks is fixed-point data.

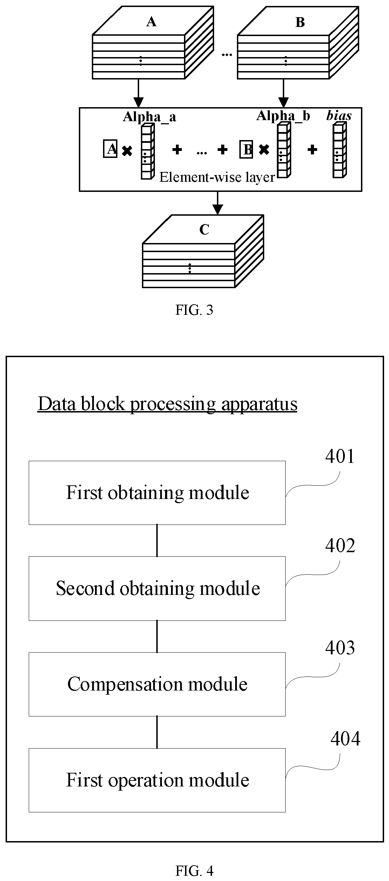

Referring to FIG. 3which is a schematic diagram of an element-wise operation of an Eltwise layer according to an embodiment of the present disclosure. As shown in FIG. 3, an upper level network layer of the Eltwise layer can input two or more sets of data blocks to the Eltwise layer, and data in each set of data blocks is fixed-point data, and the two sets of data blocks are A and B. The compensation factors corresponding to channels of the data block A is denoted by Alpha-a, and the compensation factors corresponding to channels of the data block B is denoted by Alpha-b. The data block A may be multiplied by Alpha-A to obtain a compensated data block corresponding to the data block A, and the data block B may be multiplied by Alpha-b to obtain a compensated data block corresponding to the data block B.

As another example, it is also possible to first multiply the data on channels of each of the multiple data blocks by the compensation factors corresponding to channels respectively, and then round multiplication results to obtain multiple compensated data blocks.

It should be noted that when the n data blocks inputted to the element-wise layer have different data accuracy, the compensation factors corresponding to channels of each data block may be set according to differences of the data ranges of the n data blocks, and the element-wise layer can compensate the data blocks according to the compensation factors of channels of each data block, so as to convert the data blocks into data blocks with the same data accuracy, and then perform the element-wise operation. In a case that the n data blocks inputted to the element-wise layer have the same data accuracy, the compensation factors of channels of each data block can be 1, so that the data blocks remain the same before and after the compensation, to ensure that the element-wise layer can also process normal data that does not require compensation.

For example, assuming that a piece of 8-bit fixed-point data has a value of 10 and a magnification factor of 0.25, i.e., the data accuracy is 0.25, if the magnification factor needs to be adjusted to 2, i.e., the data accuracy of the fixed-point data needs to be adjusted to 2, the data may be multiplied by a compensation factor. For example, the compensation factor may be (0.25/2), and a compensation algorithm for the fixed-point data is: 10^{∗}(0.25/2).

In step 204, the n compensated data blocks are outputted by the element-wise layer if n is equal to 1.

That is, if n is equal to 1, the one compensated data block is directly outputted by the element-wise layer.

As an example, the one compensated data block can be outputted directly to the next network layer of the element-wise layer by the element-wise layer, or the data in the one compensated data block can be quantized first to obtain second output data, and then the second output data can be outputted to the next network layer of the element-wise layer. The quantity of bits occupied by the second output data is a preset quantity of bits.

A preset bit width may be set in advance to limit a bit width of the output data of the element-wise layer. The next network layer of the element-wise layer may be a convolution layer, a fully-connected layer, or an element-wise layer, etc.

As an example, it is also possible to first add the one compensated data block with a bias factor by the element-wise layer to obtain a biased compensated data block, and then output the biased compensated data block. When the biased compensated data block is outputted, it is possible to directly output the biased compensated data block to the next network layer of the element-wise layer, or also quantize the biased compensated data block first to obtain second output data, and then output the second output data to the next network layer of the element-wise layer.

The bias factor is a compensation factor for correcting zero drift of data, and by adding the compensated data block with the bias factor, the zero drift of each data channel in the compensated data block can be corrected to reduce the possibility of zero drift in each data channel and further reduce the data error.

In step 205, if n is an integer greater than 1, an element-wise operation is performed on the n compensated data blocks by the element-wise layer to obtain an element-wise operation result, and the element-wise operation result is outputted.

The element-wise operation refers to element-by-element (same-position) computation on two or more data blocks, which specifically can be an addition operation or a multiplication operation, etc.

As an example, the step of performing the element-wise operation on the n compensated data blocks to obtain the element-wise operation result when n is an integer greater than 1 may be implemented in the following two manners:

The first implementation manner: adding up or multiplying the n compensated data blocks to obtain the element-wise operation result.

The second implementation manner: adding up or multiplying the n compensated data blocks to obtain a first operation result, and adding the first operation result with a bias factor to obtain the element-wise operation result.

For example, the n compensated data blocks are added up or multiplied to obtain the first operation result, and the first operation result is added to the bias factor to obtain the element-wise operation result.

The bias factor is a compensation factor for correcting zero drift of data. After the element-wise operation is performed on the n compensated data blocks to obtain the first operation result, zero drift after the element-wise operation can be corrected by adding the first operation result with the bias factor, thereby reducing the possibility of zero drift in each data channel and further reducing the data error of the element-wise operation.

As an example, the bias factor may be denoted by *bias.* Referring to FIG. 3, after the data on each channel of each data block A is multiplied by the corresponding compensation factor and the multiplication results are added up, the addition result can further be added with the bias factor *bias.*

In addition, the bit width of the element-wise operation result obtained after the element-wise layer performs the element-wise operation on the n compensated data blocks may not meet the operation requirements. Therefore, in the embodiments of the present disclosure, after the element-wise operation is performed on the n data blocks to obtain the element-wise operation result, inverse processing may further be performed on element-wise operation result to obtain output data that meets the bit width requirement, and then the output data is outputted to the next network layer of the element-wise layer. An inverse coefficient may be used in the inverse processing to invert the element-wise operation result.

For example, when the element-wise operation result is outputted, it is possible to directly output the element-wise operation result to the next network layer of the element-wise layer, or quantize the element-wise operation result first to obtain first output data and then output the first output data to the next network layer of the element-wise layer. The bit width that the first output data occupies is the preset bit width.

The preset bit width is set in advance to limit the bit width of the output data of the element-wise layer. The next network layer of the element-wise layer may be a convolution layer, a fully-connected layer, or an element-wise layer, etc.

As an example, quantization of the element-wise operation result may be implemented in the following two manners: 1, if the next network layer of the element-wise layer is a convolution layer or a fully-connected layer, the inverse coefficient is combined with the weight parameter; 2, if the next network layer of the element-wise layer is still an element-wise layer, the inverse coefficient is combined with the corresponding compensation factor or bias factor to complete the operation in the next layer.

In the embodiments of the present disclosure, an element-wise layer of a neural network model can obtain n data blocks, which are inputted by an upper level network layer and all date of which is fixed-point data; then obtain compensation factors corresponding to channels of each of the n data blocks from stored model data or input data of the element-wise layer; multiply data on channels of each of the n data blocks by the compensation factors corresponding to channels respectively to obtain n compensated data blocks; and in a case that n is greater than 1, perform an element-wise operation on the n compensated data blocks to obtain an element-wise operation result, and output the element-wise operation result. In other words, the present disclosure improves the element-wise layer of the neural network model, so that the element-wise layer can process fixed-point data. Therefore, an operation device can cache input data of the element-wise layer with low bits, thereby greatly reducing bandwidth consumption. Moreover, due to the relatively simple operation of the fixed-point data, operation efficiency of the neural network model on relevant hardware is improved, thus reducing hardware requirements. In addition, by setting compensation factors for channels of each data block, and multiplying data on channels of each data block by the compensation factors corresponding to channels respectively, n data blocks with inconsistent data accuracy can be converted into n compensated data blocks with consistent data accuracy. In this way, the element-wise layer can compensate for an operation error caused by a difference in data accuracy or data range by the set compensation factors, thereby improving the calculation accuracy of a fixed-point network. In addition, feature channels of the data blocks can be weighted, thus improving the flexibility of the element-wise operation.

Moreover, the embodiments of the present disclosure can flexibly implement the Eltwise operation, Attention operation and more combined operations, thereby reducing the complexity of hardware circuit implementation. In addition, the embodiments of the present disclosure can effectively quantize the accuracy loss of the model during the Eltwise operation, Attention operation and more combined operations, thus allowing some complex model structures to be applied on quantization hardware.

FIG. 4 is a schematic structural diagram of a data block processing apparatus according to an embodiment of the present disclosure. The apparatus may be integrated into a computer device or a processor. A neural network model including an element-wise layer runs in the computer device or the processor. The apparatus may be implemented as part or all of the computer device by software, hardware, or a combination thereof. As shown in FIG. 4, the apparatus includes a first obtaining module 401, a second obtaining module 402, a compensation module 403, and a first operation module 404.

The first obtaining module 401 is configured to obtain, by an element-wise layer of a neural network model, n data blocks inputted by an upper level network layer of the element-wise layer, all data in the n data blocks being fixed-point data, n being a positive integer.

The second obtaining module 402 is configured to obtain, by the element-wise layer, compensation factors corresponding to channels of each of the n data blocks from stored model data or input data of the element-wise layer.

The compensation module 403 is configured to multiply, by the element-wise layer, data on channels of each of the n data blocks by the compensation factors corresponding to channels respectively to obtain n compensated data blocks.

The first operation module 404 is configured to perform, if n is an integer greater than 1, by the element-wise layer, an element-wise operation on the n compensated data blocks to obtain an element-wise operation result, and output the element-wise operation result.

Optionally, the second obtaining module 402 is configured to:
obtain the compensation factors corresponding to channels of the target data block from the stored model data for a target data block in the n data blocks, the target data block being any data block in the n data blocks; or
obtain the compensation factors corresponding to channels of the target data block from the input data of the element-wise layer.

Optionally, the compensation module 403 is configured to:
multiply the data on channels of each of the n data blocks by the compensation factors corresponding to channels respectively, and round multiplication results to obtain the n compensated data blocks.

Optionally, when n is an integer greater than 1, the n data blocks have different data accuracy, all data in the n compensated data blocks is fixed-point data, and the n compensated data blocks have the same data accuracy.

Optionally, the first operation module 404 is configured to:
add up or multiply the n compensated data blocks to obtain the element-wise operation result; or
add up or multiply the n compensated data blocks to obtain a first operation result, and add the first operation result with a bias factor to obtain the element-wise operation result.

Optionally, the first operation module 404 is configured to:
quantize the element-wise operation result to obtain first output data, the quantity of bits occupied by the first output data being a preset quantity of bits; and
output the first output data to a next network layer of the element-wise layer.

Optionally, the apparatus further includes:
a second operation module, configured to output the n compensated data blocks by the element-wise layer if n is equal to 1.

Optionally, the second operation module is configured to:
quantize data in the n compensated data blocks to obtain second output data, the quantity of bits occupied by the second output data being a preset quantity of bits; and
output the second output data to a next network layer of the element-wise layer.

Optionally, the operation module 404 is configured to:
In the embodiments of the present disclosure, an element-wise layer of a neural network model can obtain n data blocks, which are inputted by an upper level network layer and all date of which is fixed-point data; then obtain compensation factors corresponding to channels of each of the n data blocks from stored model data or input data of the element-wise layer; multiply data on channels of each of the n data blocks by the compensation factors corresponding to channels respectively to obtain n compensated data blocks; and in a case that n is greater than 1, perform an element-wise operation on the n compensated data blocks to obtain an element-wise operation result, and output the element-wise operation result. In other words, the present disclosure improves the element-wise layer of the neural network model, so that the element-wise layer can process fixed-point data. Therefore, an operation device can cache input data of the element-wise layer with low bits, thereby greatly reducing bandwidth consumption. Moreover, due to the relatively simple operation of the fixed-point data, operation efficiency of the neural network model on relevant hardware is improved, thus reducing hardware requirements. In addition, by setting compensation factors for channels of each data block, and multiplying data on each channel of each data block by the compensation factors corresponding to channels respectively, n data blocks with inconsistent data accuracy can be converted into n compensated data blocks with consistent data accuracy. In this way, the element-wise layer can compensate for an operation error caused by a difference in data accuracy or data range by the set compensation factors, thereby improving the calculation accuracy of a fixed-point network. In addition, feature channels of the data blocks can be weighted, thus improving the flexibility of the element-wise operation.

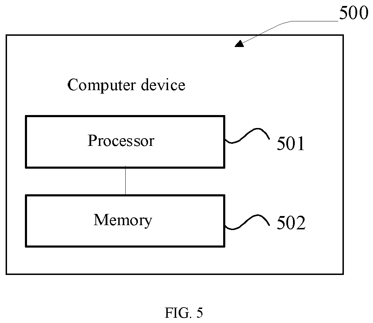

FIG. 5 is a schematic structural diagram of a computer device 500 according to an embodiment of the present disclosure. The computer device 500 may vary greatly due to different configurations or performance and may include one or more central processing units (CPUs) 501 and one or more memories 502, where the one or more memories 502 have at least one instruction stored therein, and the at least one instruction is loaded and executed by the one or more CPUs 501 to implement the data block processing method provided in the method embodiments described above. Certainly, the computer device 500 may further include components such as a wired or wireless network interface, a keyboard, and an input/output interface, for input and output. The computer device 500 may further include other components for implementing the functions of the device, which will not be described in detail herein. The memory further includes one or more programs, which are stored in the memory and configured to be executed by the CPU.

In some embodiments, a computer-readable storage medium is further provided. The storage medium stores a computer program, and the computer program is executed by a processor to implement steps of the data block processing method in the embodiments described above. For example, the computer-readable storage medium may be a ROM, a RAM, a CD-ROM, a magnetic tape, a floppy disk, an optical data storage device, or the like.

It should be noted that, the computer-readable storage medium mentioned in the present disclosure may be a non-volatile storage medium, that is, a non-transient storage medium.

It should be understood that, all or some of the steps for implementing the foregoing embodiments may be implemented by software, hardware, firmware or any combination thereof. When software is used to implement the functions, these functions may be implemented completely or partially in a form of a computer program product. The computer program product includes one or more computer instructions. The one or more computer instructions may be stored in the computer-readable storage medium.

That is, in some embodiments, a computer program product including an instruction is further provided. The computer program product, when run on a computer, causes the computer to perform the steps of the data block processing method described above.

The above descriptions are merely preferred embodiments of the present disclosure and are not intended to limit the present disclosure. Any modification, equivalent replacement and improvement within the spirit and principle of the present disclosure shall be included within the protection scope of the present disclosure.

## Claims

1. A data block processing method, comprising:
obtaining, by an element-wise layer of a neural network model, n data blocks inputted by an upper level network layer of the element-wise layer, all data in the n data blocks being fixed-point data, and n being a positive integer;
obtaining, by the element-wise layer, compensation factors corresponding to channels of each of the n data blocks from stored model data or input data of the element-wise layer;
multiplying, by the element-wise layer, data on the channels of each of the n data blocks by the compensation factors corresponding to the channels respectively to obtain n compensated data blocks; and
performing, by the element-wise layer, an element-wise operation on the n compensated data blocks to obtain an element-wise operation result and outputting the element-wise operation result, in a case that n is an integer greater than 1.

2. The method according to claim 1, wherein the obtaining the compensation factors corresponding to the channels of each of the n data blocks from stored model data or input data of the element-wise layer comprises:
obtaining compensation factors corresponding to channels of a target data block from the stored model data for the target data block in the n data blocks, the target data block being any one of the n data blocks; or
obtaining the compensation factors corresponding to channels of the target data block from the input data of the element-wise layer.

3. The method according to claim 1, wherein the multiplying the data on the channels of each of the n data blocks by the compensation factors corresponding to channels respectively to obtain n compensated data blocks comprises:
multiplying the data on the channels of each of the n data blocks by the compensation factors corresponding to the channels respectively, and rounding multiplication results to obtain the n compensated data blocks.

4. The method according to claim 1, wherein in a case that n is an integer greater than 1, the n data blocks have different data accuracy, all data in the n compensated data blocks is fixed-point data, and the n compensated data blocks have the same data accuracy.

5. The method according to claim 1, wherein the performing the element-wise operation on the n compensated data blocks to obtain the element-wise operation result comprises:
adding up or multiplying the n compensated data blocks to obtain the element-wise operation result; or
adding up or multiplying the n compensated data blocks to obtain a first operation result, and adding the first operation result with a bias factor to obtain the element-wise operation result.

6. The method according to any one of claims 1 to 5, wherein the outputting the element-wise operation result comprises:
quantizing the element-wise operation result to obtain first output data, a quantity of bits occupied by the first output data being a preset quantity of bits; and
outputting the first output data to a next network layer of the element-wise layer.

7. The method according to claim 1, after the multiplying, by the element-wise layer, data on channels of each of the n data blocks by the compensation factors corresponding to channels respectively to obtain n compensated data blocks, further comprising:
outputting the n compensated data blocks by the element-wise layer in a case that n is equal to 1.

8. The method according to claim 7, wherein the outputting the n compensated data blocks comprises:
quantizing data in the n compensated data blocks to obtain second output data, a quantity of bits occupied by the second output data being a preset quantity of bits; and
outputting the second output data to a next network layer of the element-wise layer.

9. A data block processing apparatus, comprising:
a first obtaining module, configured to obtain, by an element-wise layer of a neural network model, n data blocks inputted by an upper level network layer of the element-wise layer, all data in the n data blocks being fixed-point data, and n being a positive integer;
a second obtaining module, configured to obtain, by the element-wise layer, compensation factors corresponding to channels of each of the n data blocks from stored model data or input data of the element-wise layer;
a compensation module, configured to multiply, by the element-wise layer, data on channels of each of the n data blocks by the compensation factors corresponding to the channels respectively to obtain n compensated data blocks; and
a first operation module, configured to perform, by the element-wise layer, an element-wise operation on the n compensated data blocks to obtain an element-wise operation result and output the element-wise operation result, in a case that n is an integer greater than 1.

10. The apparatus according to claim 9, wherein the second obtaining module is configured to:
obtain compensation factors corresponding to channels of a target data block from the stored model data for the target data block in the n data blocks, the target data block being any one of the n data blocks; or
obtain the compensation factors corresponding to channels of the target data block from the input data of the element-wise layer.

11. The apparatus according to claim 9, wherein the compensation module is configured to:
multiply the data on channels of each of the n data blocks by the compensation factors corresponding to the channels respectively, and round multiplication results to obtain the n compensated data blocks.

12. The apparatus according to claim 9, wherein when in a case that is an integer greater than 1, the n data blocks have different data accuracy, all data in the n compensated data blocks is fixed-point data, and the n compensated data blocks have the same data accuracy.

13. The apparatus according to claim 9, wherein the first operation module is configured to:
add up or multiply the n compensated data blocks to obtain the element-wise operation result; or
add up or multiply the n compensated data blocks to obtain a first operation result, and add the first operation result with a bias factor to obtain the element-wise operation result.

14. The apparatus according to any one of claims 9 to 13, wherein the first operation module is configured to:
quantize the element-wise operation result to obtain first output data, a quantity of bits occupied by the first output data being a preset quantity of bits; and
output the first output data to a next network layer of the element-wise layer.

15. The apparatus according to claim 9, further comprising:
a second operation module, configured to output the n compensated data blocks by the element-wise layer in a case that n is equal to 1.

16. The apparatus according to claim 15, wherein the second operation module is configured to:
quantize data in the n compensated data blocks to obtain second output data, a quantity of bits occupied by the second output data being a preset quantity of bits; and
output the second output data to a next network layer of the element-wise layer.

17. A computer device, comprising a processor, a communication interface, a memory, and a communication bus, wherein the processor, the communication interface, and the memory communicate with each other through the communication bus, the memory is configured to store a computer program, and the processor is configured to execute the program stored in the memory, to implement the following steps:
obtaining, by an element-wise layer of a neural network model, n data blocks inputted by an upper level network layer of the element-wise layer, all data in the n data blocks being fixed-point data, and n being a positive integer;
obtaining, by the element-wise layer, compensation factors corresponding to channels of each of the n data blocks from stored model data or input data of the element-wise layer;
multiplying, by the element-wise layer, data on channels of each of the n data blocks by the compensation factors corresponding to the channels respectively to obtain n compensated data blocks; and
performing, by the element-wise layer, an element-wise operation on the n compensated data blocks to obtain an element-wise operation result and outputting the element-wise operation result, in a case that n is an integer greater than 1.

18. A computer-readable storage medium, storing a computer program, wherein the computer program is executed by a processor to implement the following steps:
obtaining, by an element-wise layer of a neural network model, n data blocks inputted by an upper level network layer of the element-wise layer, all data in the n data blocks being fixed-point data, n being a positive integer;
obtaining, by the element-wise layer, compensation factors corresponding to channels of each of the n data blocks from stored model data or input data of the element-wise layer;
multiplying, by the element-wise layer, data on channels of each of the n data blocks by the compensation factors corresponding to the channels respectively to obtain n compensated data blocks; and
performing, by the element-wise layer, an element-wise operation on the n compensated data blocks to obtain an element-wise operation result and outputting the element-wise operation result, in a case that n is an integer greater than 1.
